# EUROPEAN PATENT SPECIFICATION

(11) **EP 4 265 907 B1**
(45) Date of publication and mention of the grant of the patent: **18.11.2026**
(21) Application number: 22168851.8
(22) Date of filing: 19.04.2022
(51) Int. Cl.: F03D 1/06, F03D 80/70

(54) **LUBRICANT RETENTION SYSTEMS**
SCHMIERMITTELRÜCKHALTESYSTEME
SYSTÈMES DE RÉTENTION DE LUBRIFIANT

(43) Date of publication of application: 25.10.2023
(73) Proprietor: LM Wind Power A/S, 6000 Kolding (DK)
(72) Inventor: PEDERSEN, Birgit Østergaard, DK-6000 KOLDING (DK)
(74) Representative: ZBM Patents - Zea, Barlocci & Markvardsen

(56) References cited:
- EP-A1- 2 481 926
- EP-A2- 2 597 301
- CN-U- 202 493 385
- US-B2- 7 077 630

## Description

The present disclosure relates to lubricant retention systems for pitch bearings of wind turbines, blade root portions having these lubricant retention systems and methods for mounting lubrication retention systems in wind turbine blades.

### BACKGROUND

Modern wind turbines are commonly used to supply electricity into the electrical grid. Wind turbines of this kind generally comprise a rotor with a rotor hub and a plurality of blades. The rotor is set into rotation under the influence of the wind on the blades. The rotation of the rotor shaft drives the generator rotor either directly ("directly driven") or through the use of a gearbox. The gearbox (if present), the generator and other systems are usually mounted in a nacelle on top of a wind turbine tower.

An auxiliary system generally provided on wind turbines is the pitch system. Pitch systems are employed for adapting the position of a wind turbine blade to varying wind conditions. A pitch system normally comprises a pitch bearing comprising an outer ring, an inner ring and, between these two rings, one or more rows of rolling elements which allow both rings to rotate relative to each other. Lubricant, e.g. oil or grease, is provided between the rings to prevent an excessive wear of the rings and of the rolling elements. The rolling elements, e.g. balls or rollers, may be arranged between an inner race of the inner ring and an outer race the outer ring for reducing the friction between these rings.

Depending on the type of rolling elements, the pitch bearing may be for example a ball bearing or a roller bearing. The rolling elements of ball bearings are balls that rotate between the inner race and the outer race. In roller bearings, the rolling elements arranged between the races have a generally cylindrical or conical shape and are generally called rollers.

Alternatively, plain bearings or sliding bearings may also be used. In these bearings, a lubricant film is provided between planar surfaces of the inner and the outer ring to reduce friction.

A wind turbine blade may be attached either at the inner ring or at the outer ring, whereas the hub is connected at the other of the rings. A blade may perform a relative rotational movement with respect to the hub when a pitch system is actuated. The bearing inner ring may therefore perform a rotational movement with respect to the bearing outer ring.

Pitch bearings may generally be actuated mechanically or hydraulically. In mechanical pitch systems, a drive pinion may mesh with an annular gear provided on the inner or the outer ring to set the wind turbine blade into rotation.

Pitch bearings may comprise a sealing member to reduce lubricant leaks from the pitch bearing. For example, an annular sealing member may be provided to close a gap formed between the inner and the outer ring. Lubricant may generally spill out through the gap between the rings.

Furthermore, a groove may be machined in one or in both rings to accumulate lubricant. This groove widens the gap between the inner and the outer ring so as to increase the lubricant stored. The annular sealing member may also cover the groove to reduce lubricant spillage.

However, annular sealing members do not completely avoid lubricant leaks from the pitch bearings. Lubricant leaks may thus end on the ground which may generate a risk of potential environmental pollution. Some environmental authorities are also increasing the requirements for minimizing oil or grease leaks from the pitch bearing reaching the ground.

Furthermore, the volume of the groove to accumulate lubricant is relatively small and fills up quickly. Maintenance operations to empty the lubricant out of the cavity thus have to be frequently performed.

Document US 8,043,012 B2 proposes a brush seal having a bundle of bendable bristles that absorb grease leaks from the pitch bearing. However, the bristles get impregnated relatively quick and the volume of the grease absorbed by the bristles of the seal brush is limited. Accordingly, the capacity to retain grease of brush seals decrease with the time. Consequently, maintenance operations to clean these bristles or even to replace the complete brush seal must be periodically performed.

Document EP2597301 A2 describes another example of a sealing apparatus for a pitch bearing.

The present disclosure provides examples of systems and methods that at least partially resolve some of the aforementioned disadvantages.

### SUMMARY

In a first aspect, a lubricant retention system for a pitch bearing of a wind turbine is provided. The pitch bearing comprises a first bearing component configured to be coupled to a wind turbine blade and a second bearing component configured to be coupled to a rotor hub of a wind turbine. The first bearing component is configured to rotate with respect to the second bearing component.

The lubricant retention system comprises a base and a sealing lip. The base is configured to be connected to a wind turbine blade. The base comprises a base fitting wall having an outer base fitting surface configured to fit a surface of the wind turbine blade. The sealing lip comprises a lip distal end configured to contact the second bearing component coupled to a rotor hub for defining a chamber for retaining lubricant from the pitch bearing. In addition, the base comprises a base engaging portion configured to engage with a lip engaging portion of the sealing lip for removably coupling the sealing lip to the base.

According to this aspect, retention of lubricant, e.g. oil and/or grease, leaking from the pitch bearing is improved. Therefore, the risk of lubricant leaks from the pitch bearing reaching the ground is reduced. Consequently, the risk of environmental pollution may be minimized. A gap between the first bearing component and the second bearing component is enclosed by the lubricant retention system when the lip distal end of the sealing lip contacts the second bearing component of the pitch bearing. A cavity to accumulate lubricant leaks from pitch bearing is thus formed. This cavity allows storing a volume of lubricant greater than in grooves machined in the bearing components or grease absorbed by bristles of seal brushes. Frequency of maintenance operations of emptying the cavity may thus be reduced. In addition, maintenance operations related to the impregnated bristles of seal brushes are avoided.

Connecting the base of the lubricant retention system to the wind turbine blade allows to install the lubricant retention system in existing wind turbines in an easy manner. Attaching a lubricant retention system to the pitch bearing may be more complex since the available space of the pitch bearing for attaching the lubricant retention is more limited. Accordingly, the base of the lubricant retention system may be attached to the blade in a production plant, on the ground before lifting the blade or even in blades already connected to the rotor hub. The sealing lip may then be removably coupled to the base when the base is attached to the blade. The sealing lip may be removably coupled to the base after the blade is coupled to the first bearing component to adjust the position of the distal lip end relative to the second bearing component.

In addition, the pitch bearing may suffer structural problems or may require a design change if a lubricant retention system is connected to the pitch bearing. For example, it may be necessary to machine holes on one bearing component to screw the lubricant retention system into this bearing component. This may adversely affect the structural behavior of the pitch bearing. The risk of creation and propagation of cracks on the pitch bearing may thus be increased.

As explained before, the sealing lip is detachably connected to the base. The lip engaging portion of the sealing lip can be engaged with the base engaging portion. An easy connection and disconnection between the sealing lip and the base may thus be established. For example, the sealing lip may be connected to the base by using a manual force. In addition, the sealing lip may be easily replaceable. Heavy fastening tools may thus be avoided. Therefore, maintenance operations may be simplified and optimized.

In a further aspect, a blade root portion of a wind turbine blade is provided. The blade root portion comprises a blade shell and a blade root attachment portion. The blade shell comprises an inner blade shell surface and an outer blade shell surface. The blade root attachment portion is configured to attach the blade root portion to a first bearing component of a pitch bearing. The blade root portion further comprises a lubricant retention system according to any of the examples herein described. The base of the lubricant retention system is coupled to the blade shell and/or to the blade root attachment portion.

Similar to the first aspect, lubricant leaks from the pitch bearing may be retained with an easy to install and to remove system.

In further aspects, a wind turbine blade having the blade root portion according to any of the examples herein described is provided. A rotor having a rotor hub and one or more blades and/or a wind turbine having such a rotor may also be provided.

In yet a further aspect, a method for mounting a lubricant retention system for a pitch bearing in a wind turbine blade is provided. The pitch bearing comprises a first bearing component and a second bearing component, the first bearing component configured to rotate with respect to the second bearing component. The method comprises connecting a base of the lubricant retention system to a blade root portion of the wind turbine blade configured to be coupled to the first bearing component. In addition, the method comprises orienting a lip distal end of a sealing lip of the lubricant retention system towards the second bearing component. The method further comprises removably coupling a lip engaging portion of the sealing lip to a base engaging portion of the base in such a way that the lip distal end of the sealing lip contacts the second bearing component for defining a chamber for retaining lubricant from the pitch bearing.

Advantages derived from this aspect may be similar to those mentioned regarding the previous aspects.

### BRIEF DESCRIPTION OF THE DRAWINGS

Non-limiting examples of the present disclosure will be described in the following, with reference to the appended drawings, in which:
Figure 1 illustrates a perspective view of a wind turbine according to one example;
Figure 2 illustrates a simplified, internal view of a nacelle of a wind turbine according to one example;
Figure 3 shows a perspective view of a wind turbine blade according to one example;
Figure 4 shows a lubricant retention system according to one example of the present disclosure;
Figure 5 is a zoomed-in view of the lubricant retention system of Figure 4;
Figure 6 shows a lubricant retention system according to one example of the present disclosure;
Figure 7 shows a lubricant retention system according to one example of the present disclosure;
Figure 8 shows a lubricant retention system according to one example of the present disclosure; and
Figure 9 is a block diagram of a method for mounting a lubricant retention system for a pitch bearing in wind turbine blade according to an example of the present disclosure.

### DETAILED DESCRIPTION OF EXAMPLES

In these figures the same reference signs have been used to designate matching elements.

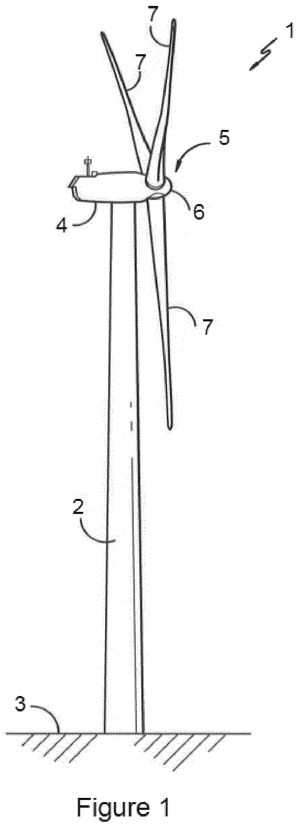

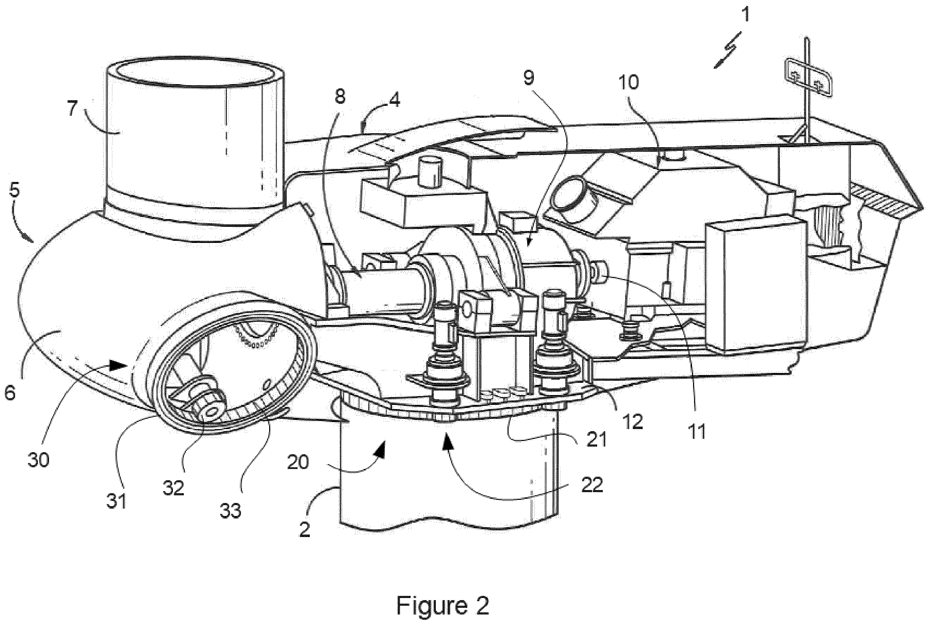

Figure 1 illustrates a perspective view of one example of a wind turbine 1. As shown, the wind turbine 1 includes a tower 2 extending from a support surface 3, a nacelle 4 mounted on the tower 2, and a rotor 5 coupled to the nacelle 4. The rotor 5 includes a rotatable hub 6 and at least one rotor blade 7 coupled to and extending outwardly from the rotor hub 6. For example, in the illustrated example, the rotor 5 includes three wind turbine blades 7. However, in an alternative embodiment, the rotor 5 may include more or less than three blades 7. Each wind turbine blade 7 may be spaced from the rotor hub 6 to facilitate rotating the rotor 5 to enable kinetic energy to be transferred from the wind into usable mechanical energy, and subsequently, electrical energy. For instance, the rotor hub 6 may be rotatably coupled to an electric generator 10 (Figure 2) positioned within the nacelle 4 or forming part of the nacelle to permit electrical energy to be produced.

Figure 2 illustrates a simplified, internal view of one example of the nacelle 4 of the wind turbine 1 of the Figure 1. As shown, the electric generator 10 may be disposed within the nacelle 4. In general, the generator 10 may be coupled to the rotor 5 of the wind turbine 1 for generating electrical power from the rotational energy generated by the rotor 5. For example, the rotor 5 may include a main rotor shaft 8 coupled to the hub 6 for rotation therewith. The generator 10 may then be coupled to the rotor shaft 8 such that the rotation of the rotor shaft 8 drives the generator 10. For instance, in this figure, the generator 10 includes a generator shaft 11 rotatably coupled to the rotor shaft 8 through a gearbox 9. In other examples, the generator may be directly coupled to the rotor hub or to the rotor shaft.

It should be appreciated that the rotor shaft 8, gearbox 9, and generator 10 may generally be supported within the nacelle 4 by a bedplate or a support frame 12 positioned atop the tower 2.

The nacelle 4 is rotatably coupled to the tower 2 through a yaw system 20. The yaw system comprises a yaw bearing (not visible in Figure 2) having two bearing components configured to rotate with respect to the other. The tower 2 is coupled to one of the bearing components and the bedplate or support frame 12 of the nacelle 4 is coupled to the other bearing component. The yaw system 20 comprises a yaw annular gear 21 and a plurality of yaw drives 22 with a motor, a gearbox and a pinion for meshing with the annular gear for rotating one of the bearing components with respect to the other.

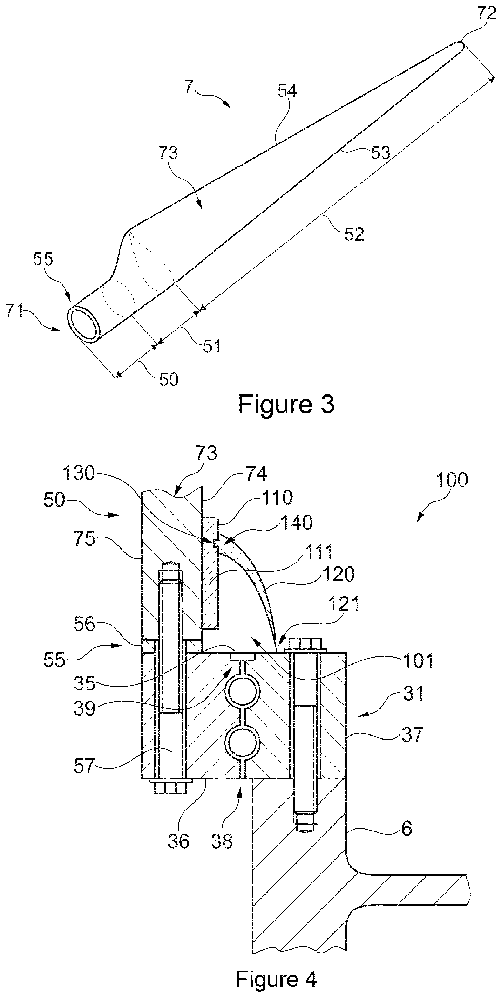

Blades 7 are coupled to the rotor hub 6 with a pitch bearing 31 in between the blade 7 and the rotor hub 6. The pitch bearing 31 comprises an inner ring and an outer ring (shown in Figure 4). A wind turbine blade may be attached either at the inner bearing ring or at the outer bearing ring, whereas the hub is connected at the other. A blade 7 may perform a relative rotational movement with respect to the rotor hub 6 when a pitch system 30 is actuated. The inner bearing ring may therefore perform a rotational movement with respect to the outer bearing ring. The pitch system 30 of Figure 2 comprises a pinion 32 that mesh with a pitch annular gear 33 provided on the inner bearing ring to set the wind turbine blade into rotation.

Figure 3 illustrates an example of a wind turbine blade. The wind turbine blade 7 extends in a longitudinal direction from a root end 71 and a tip end 72. The blade 7 comprises a blade root region or portion 50 closest to the rotor hub, a profiled or an airfoil portion 52 furthest away from the rotor hub and a transition portion 51 between the blade root portion 50 and the airfoil portion 52. The blade 7 comprises a leading edge 53 facing the direction of rotation of the blade 7, when mounted on the rotor hub, and a trailing edge 54 facing the opposite direction of the leading edge 53.

The airfoil portion 52 has a shape designed to generate lift, whereas the blade root portion 50 has a circular or elliptical cross-section for structural considerations and for easy mounting the blade to the rotor hub. The diameter or the chord of the blade root portion 50 may be constant along the entire root portion 50. At the transition portion 51, the profile gradually changes from the circular or elliptical cross-section of the blade root portion 50 to the airfoil profile of the airfoil portion 52.

The wind turbine blade 7 comprises a blade shell 73. The blade shell may comprise two blade shell parts, for example, a pressure side blade shell and a suction side blade shell. The pressure side blade shell may be joined, e.g. glued or bonded, to the suction side blade shell along joining lines along the leading edge 53 and the trailing edge 54. The blade shell 73 comprises an outer side or surface that defines the external shape of the blade, e.g. the outer shape at the blade root portion and the outer shape at the airfoil portion. The blade shell 73 also comprises an inner side or surface that defines the internal volume of the blade and faces a load carrying structure (not shown). The blade shell 73 may be made of fiber-reinforced polymer, e.g. glass-fiber and/or carbon fiber.

The blade root portion 50 comprises a blade root attachment portion 55 configured to attach the blade root portion to a first bearing component of the pitch bearing, e.g. a bearing ring. The blade root attachment portion may comprise a plurality of fastening members distributed along the root end. In some examples, the blade root end comprises a blade flange to face the first bearing component. The blade root end may comprise a structural stiffener, e.g. a stiffening plate or a stiffening ring, at the blade root attachment portion to increase the structural resistance of the blade root portion.

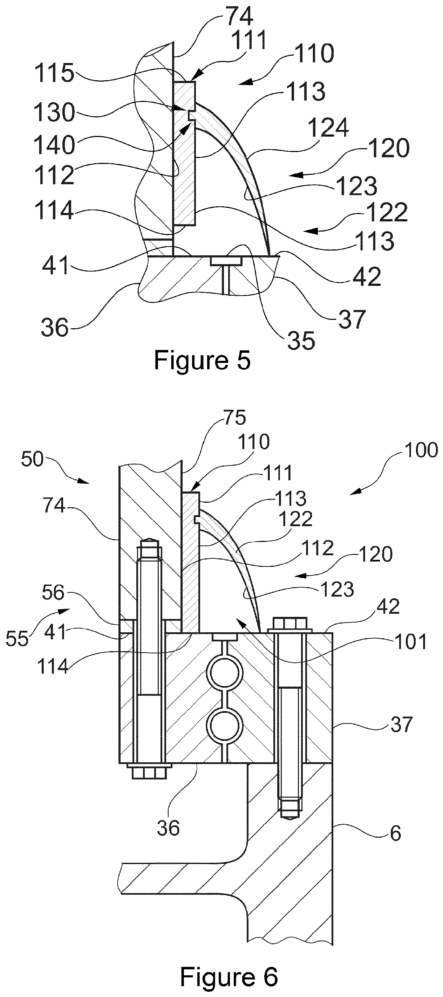

Figure 4 shows a lubricant retention system according to one example of the present disclosure and figure 5 is a zoomed in view the lubricant retention system of Figure 4. The lubricant retention system 100 of this example is coupled to a blade root portion 50. The blade root portion 50 comprises a blade shell 73 comprising an inner blade shell surface 74 and an outer blade shell surface 75. The outer blade shell surface 75 defines the outer shape of the blade.

The blade root portion 50 further comprises a blade root attachment portion 55 configured to attach the blade root portion 50 to a first bearing component 36 of a pitch bearing 31. The second bearing component 37 is coupled to the rotor hub 6. Accordingly, the first bearing component 36 is configured to be coupled to a wind turbine blade and the second bearing component 37 is configured to be coupled to a rotor hub 6 of a wind turbine. The blade root portion 50 of this example comprises a circular cross-section.

In this example, the first bearing component 36 is an outer ring and the second bearing component 37 is an inner ring. However, in other examples, the first bearing component is the inner ring and the second bearing component is the outer ring.

The blade root attachment portion 55 comprises a receiver to secure a fastener 57. The receiver may be for example an insert with an inner thread or a T-bolt connector. The first bearing component 36 of this figure comprises a through hole. The fastener 57 may pass through the hole of the first bearing component and may be secured to the receiver of the blade root attachment portion 55 to connect the blade to the first bearing component 36. A plurality of fastener or bolts may be distributed along the circumference of the first bearing component to connect the pitch bearing to the blade.

In this figure, the blade root attachment portion 55 comprises a mounting flange 56 to face the upper surface 41 of the first bearing component 36. In some examples, the blade root attachment portion comprises a stiffener element to increase the radial stiffness of the blade. The stiffener element may be a stiffening ring. A stiffening ring may be arranged between the mounting flange and the laminate.

In figure 4, the rotor hub 6 comprises a threaded hole. A fastener, e.g. a bolt, may pass through a hole of the second bearing component 37 and may be secured, e.g. threaded, in the threaded hole of the rotor hub 6. This fastener may thus connect the rotor hub 6 to the second bearing component 37. A plurality of fasteners may be threaded in a plurality of threaded holes formed at the rotor hub 6 to connect the second bearing component to the rotor hub. In other examples, rotor hub and the second bearing component may comprise a plurality of through holes. Bolts may be inserted into these through holes and secured with nuts to connect the second bearing component to the hub.

The pitch bearing 31 of this figure is a ball bearing and a gap 38 is formed between the first bearing component 36 and the second bearing component 37. Lubricant, e.g. grease and/or oil, may be provided between the bearing components to reduce the friction. This lubricant may flow through the gap 38 between the first bearing component 36 and the second bearing component 37. In this example, a groove 39 is machined on the upper sides of the first and second bearing components. Lubricant may be accumulated in this groove 39. The pitch bearing 31 of this figure further comprises an annular sealing member 35 covering the groove 39. The annular sealing member 35 may help to reduce the lubricant leaks from the gap 38. However, the annular sealing member 35 does not completely avoid lubricant leaks from the pitch bearing 31.

The lubricant retention system 100 comprises a base 110 connected to the blade root portion 50. The base 110 is thus configured to be connected to the wind turbine blade. The base 110 comprises a base fitting wall 111 having an outer base fitting surface 112. In this figure, the outer base fitting surface 112 fits the inner blade shell surface 74. In other examples, the outer base fitting surface 112 fits the outer blade shell surface 75. The outer base fitting surface 112 is thus configured to fit a surface of the wind turbine blade, e.g. the blade shell and/or a blade root attachment portion. The base fitting wall 111 further comprises an inner base fitting surface 113 opposite to the outer base fitting surface 112.

The base fitting wall 111 of this example extend from a base root end 114 to a base distal end 115 in a base longitudinal direction. When the base 110 is coupled to the wind turbine blade, the base longitudinal direction is parallel to the longitudinal direction of the wind turbine blade. In this example, the base root end 114 of the base fitting wall is apart from the upper surface 41 of the first bearing component 36. However, in other examples, the base root end 114 may rest on the upper surface 41 of the first bearing component 36. In these examples, the outer base fitting surface 112 may be coupled to the blade shell 73, e.g. to inner blade shell surface 74, and/or to the blade root attachment portion 55, e.g. to an inner surface of the mounting flange 56.

In this example, the outer base fitting surface 112 is attached to the inner blade shell surface 74. For example, glue or an adhesive may be used for fixing the outer base fitting surface 112 to the blade shell 73. However, other suitable connecting methods may be alternatively used. For example, a pressure element may be used for exerting an outwards pressure against the inner base fitting surface 113 for fixing the base fitting wall 111 to the blade shell. The pressure element may be a disc with a variable diameter that may be arranged inside the wind turbine blade to exercise an outwards radial pressure onto the base fitting wall.

The lubricant retention system 100 further comprises a sealing lip 120 removably connected to the base 110. The sealing lip 120 comprises a lip engaging portion 140 that engages with a base engaging portion 130 of the base. The lip engaging portion 140 fits the base engaging portion for removably connecting the sealing lip 120 to the base 110. The shape of the lip engaging portion 140 thus fits the shape of the base engaging portion 130.

In further examples, a portion of the base, e.g. the base fitting wall, may be integrated within the blade shell. The base fitting wall may be arranged between fibers of the blade shell during blade manufacturing.

In this example, the base engaging portion 130 is a receptacle and the lip engaging portion 140 is a protrusion that fits the receiver. The lip engaging portion may be pressed into the base engaging portion so as to lock the lip engaging portion onto the base engaging portion. A non-permanent connection may thus be formed. In other examples, the base engaging portion may be a protrusion configured to be inserted and retain inside the lip engaging portion having the shape of a receiver. Snap-fit connectors may be employed for removably connecting the lip engaging portion to the base engaging portion.

The sealing lip 120 extends from the lip engaging portion 140 to the lip distal end 121. In this example, the lip distal end 121 contacts the second bearing component 37. In this example, the sealing lip 120 extends from a radial direction (perpendicular to the base longitudinal direction) to a direction substantially parallel to the base longitudinal direction. In this example, the sealing lip 120 comprises a lip closing wall 122 that extends to the lip distal end 121. In this example, the lip closing wall 122 extends from the lip engaging portion 140 to the lip distal end 121. The lip closing wall 122 extends back towards the lip distal end 121. In other examples, other parts of the sealing lip may be arranged between the lip engaging portion 140 and the lip closing wall 122.

In use, the lip distal end 121 at least reaches the radial plane of the base root end 114. In this figure, the radial plane of the lip distal end 121 is closer to the blade hub than the radial plane of the base root end 114.

The lip closing wall 122 of this example comprises a curved shape. In these figures, the lip closing wall 122 comprises an outer lip closing surface 124 and an inner lip closing surface 123. The inner lip closing surface 123 of these figures faces the inner base fitting surface 113. The outer lip closing surface 124 is opposite to the inner lip closing surface 123.

In this example, the lip distal end 121 contacts the upper surface 42 of the second bearing component 37. The sealing lip 120 thus extend from the blade that is connected to the first bearing component 36 towards the second bearing component 37. The lubricant retention system 100 rotates together with the first bearing component 36. The lip distal end 121 exerts a pressure against the upper surface 42 of the second bearing component 37 but allows the rotation of first bearing component 36 with respect to the second bearing component 37.

In this figure, the lip distal end 121 contacts an upper surface of the inner bearing ring. In other examples, the lip distal end contacts an upper surface of a stiffening plate or ring of the second bearing component. As the lip distal end 121 contacts the upper surface 42 of the second bearing component 37, a chamber 101 is formed enclosing the gap 38 of the pitch bearing 31. Lubricant spilling out from the groove 39 covered by the annular sealing member 35 may be retained within the chamber 101.

Accordingly, the leaking point of the pitch bearing 31 is thus enclosed. Sealing effect is consequently improved. Lubricant leaks from the pitch bearing 31 may be stored within the chamber 101. Volume of lubricant leaks retained by the chamber may thus be increased. In this example, the chamber 101 extends inside the wind turbine blade. The chamber 101 of figures 4 and 5 is delimited by an inner surface of the blade, e.g. an inner surface of the mounting flange 56 and the inner blade shell surface 74, the inner base fitting surface 113, the inner lip closing surface 123, the upper surface 41 of the first bearing component 36 and the upper surface 42 of the second bearing component 37.

In this example, the lubricant retention system 100 extends 360°. The base 110 and the sealing lip 120 extend 360°. In some examples, the base 110 may comprise a plurality of annular segments that forms a base extending 360°. In some examples, the base may be formed by a single annular element extending 360°. Similarly, the sealing lip may be formed by a single annular element extending 360° or by a plurality of segments joined together that forms an annular sealing lip. The segments may be connected to each other by e.g. glue or adhesive. Contrary to brush seals, the lip distal end is annular and extends 360° in a continuous way. Sealing effect is thus improved.

The lubricant retention system may comprise a flexible material. For example, the base may be made from a flexible material to adjust the base to the diameter of the blade root portion. The sealing lip may be made from a flexible material to adjust the length of the sealing lip to the shape of the second bearing component. One example of flexible material is rubber. The lubricant retention system may comprise rubber, e.g. the base and/or the sealing lip may be manufactured from rubber.

In some examples, the sealing lip may comprise an internal stiffener. For example, the sealing lip may be manufactured from rubber and may comprise an internal stiffener. The internal stiffener increases the stiffness of the sealing lip to maintain a specific shape of the sealing lip. The lubricant retained by the lubricant retention system may exercise a pressure against the sealing lip. The internal stiffener may prevent an excessive deformation of the sealing lip caused by e.g. the pressure of the lubricant contained within the lubricant retention system. The internal stiffener may be an internal steel plate.

Figure 6 shows a lubricant retention system according to one example of the present disclosure. Contrary to the lubricant retention system of figures 4 and 5, the lubricant retention system 100 of figure 6 is connected to the outer blade shell surface 75.

The blade root portion 50 is connected to the first bearing component 36 through the blade root attachment portion 55 and the second bearing component 37 is connected to the rotor hub 6. However, in this example, the first bearing component 36 comprises an inner ring and the second bearing component 37 comprises an outer ring. The diameter of the second bearing component 37 of this figure is greater than the diameter of the first bearing component 36.

As explained before, the first and/or the second bearing component may comprise a stiffener element to increase the radial stiffness of the blade-hub connection.

The lubricant retention system 100 of this figure is similar to the examples described regarding the figures 4 and 5. However, in this figure, the outer base fitting surface 112 of the base fitting wall 111 of the base 110 fits the outer blade shell surface 75. Furthermore, the base root end 114 of the base fitting wall 111 of this figure rests on the upper surface 41 of the first bearing component 36. The outer base fitting surface 112 of this example also fits the outer surface of the mounting flange 56. In other examples with the lubricant retention system arranged at the outer side of the flange, there may be a gap between the base root end of the base fitting wall and the upper surface of the first bearing component.

In figure 6, the base fitting wall 111 surrounds the outer blade shell surface 75. Glues or adhesives may be used for connecting the outer base fitting surface 112 to the outer blade shell surface 75. In some examples, a pressure element may be used to exert an inward pressure against the base fitting wall. For example, a ring arranged around the base fitting wall may press the base to the blade shell. Steel wires may be arranged around the base fitting wall to secure the base to the outer blade shell surface 75, e.g. by wrapping the base fitting wall and the blade.

As previously described, the sealing lip 120 extends to contact the upper surface 42 of the second bearing component 37 so as to form the chamber 101 to collect lubricant leaks from the pitch bearing. In the example depicted in figure 6, the chamber 101 is defined by the inner base fitting surface 113, the inner lip closing surface 123 of the lip closing wall 122 and the upper surface 41 of the first bearing component 36 and the upper surface 42 of the second bearing component 37.

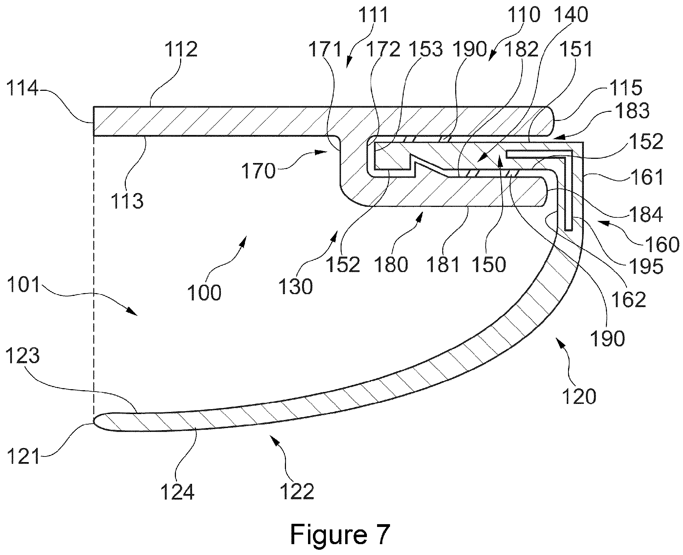

Figure 7 shows a lubricant retention system according to one example of the present disclosure. The lubricant retention system 100 comprises a base 110 removably connected to the sealing lip 120.

The sealing lip 120 of this example, comprises a lip longitudinal wall 150 having an outer lip longitudinal surface 151 and an inner lip longitudinal surface 152. The lip longitudinal wall 150 extends from the lip longitudinal end 153 to a lip radial wall 160 in a direction substantially parallel to the base fitting wall 111 when the base 110 is coupled to the sealing lip 120.

In this figure, the lip radial wall 160 extends substantially perpendicular from the lip longitudinal wall 150. When the base 110 is mounted on the wind turbine blade and the sealing lip 120 is coupled to the base 110, the lip radial wall 160 extends along a radial direction. The lip radial wall 160 comprises an outer lip radial surface 161 and an inner lip radial surface 162. In use, the outer lip radial surface 161 is oriented towards the blade tip and the inner lip radial surface 162 to the root end of the blade.

In the example of figure 7, the sealing lip 120 comprises a lip closing wall 122 extending from the lip radial wall 160 to the lip distal end 121. The lip closing wall 122 may comprise a curved portion extending to the lip distal end 121. In this particular example, the lip closing wall 122 has a curved shape. However, in other examples, the lip closing wall may comprise a straight portion and a curved portion. The lip closing wall 122 of this figure forms an angle with the lip radial wall 160 between 60° and 150°, specifically between 90° and 150°. This angle allows the creation of a chamber 101 with a sufficient volume to store lubricant leaks from the pitch bearing.

The lip closing wall 122 of this example comprises an inner lip closing surface 123 and an outer lip closing surface 124. The inner lip longitudinal surface 152 substantially faces the inner lip closing surface 123. The inner lip closing surface 123, the inner lip radial surface 162 and the inner lip closing surface 123 defines a lip cavity.

In this example, the lip longitudinal wall 150 comprises the lip engaging portion 140. In some examples, the lip engaging portion may be arranged on the lip radial wall. In further examples, the sealing lip may comprise a plurality of lip engaging portions, e.g. arranged on the lip longitudinal wall 150.

One of the base engaging portions 130 and the lip engaging portion 140 comprises a protrusion and the other one comprises a receptacle to receive the protrusion. In this figure, the base engaging portion 130 comprises a protrusion and the lip engaging portion 140 comprises a receptacle that fits with the protrusion. The protrusion of the base engaging portion 130 comprises a triangular cross-section. The protrusion may comprise a snap-fit male connector and the receptacle comprises a snap-fit female connector. A simple and easier to use connection may thus be established between the base and the sealing lip. The sealing lip may thus be clipped into the base.

The base 110 comprises a base fitting wall 111 with an outer base fitting surface 112 to fit a surface of the wind turbine blade and an inner base fitting surface 113 opposite to the outer base fitting surface 112. The base fitting wall extends from a base root end 114 to a base distal end 115. In this figure, the base root end 114 and the lip distal end 121 are substantially in the same radial plane. In other examples, the radial plane of the base root end 114 and the radial plane of the lip distal end may be offset. However, in all these cases, the lip distal end 121 contacts the upper surface of the second bearing component to enclose lubricant leaks from the pitch bearing.

In this example, the base 110 comprises a base radial wall 170 extending substantially perpendicular from the base fitting wall 111. The base radial wall 170 extends in a radial direction from the inner base fitting surface 113. In this example, the base radial wall 170 extends from a middle point of the inner base fitting surface 113. Accordingly, the inner base fitting surface 113 extends a first length from the base root end 114 to the base radial wall 170 and a second length from the base radial wall 170 to the base distal end 115. The base radial wall 170 comprises an outer base radial surface 171 and an inner base radial surface 172. The inner base radial surface 172 of this example faces the lip longitudinal end 153. When the lubricant retention system is attached to a wind turbine blade, the outer base radial surface 171 faces the root end of the blade. In use, the base radial wall 170 extends in a radial direction. For example, when the base is connected to the inner blade shell surface the base radial wall extends radially inward from the base fitting wall and when the base is connected to the outer blade shell surface the base radial wall extends radially outward from the base fitting wall.

Furthermore, the base 110 of this example comprises a base longitudinal wall 180 extending perpendicular from the base radial wall 170. The base longitudinal wall 180 is substantially parallel to the base fitting wall 111. The base longitudinal wall 180 extends a length towards the base longitudinal distal end 184. The base longitudinal distal end 184 and the base distal end 115 may be on the same radial plane.

In this figure, the base longitudinal wall 180 comprises an outer base longitudinal surface 181 and an inner base longitudinal surface 182. The outer base longitudinal surface 181 is opposite to the inner base longitudinal surface 182. The inner base longitudinal surface 182 faces the inner base fitting surface 113. In particular, the inner base longitudinal surface 182 faces the second length of inner base fitting surface 113.

The base engaging portion 130 of this example is arranged at the base longitudinal wall 180.

In this example, the inner base fitting surface 113, the inner base radial surface 172 and the inner base longitudinal surface 182 defines a base cavity. This base cavity may be a receptacle to enclose the lip longitudinal wall 150. The lip longitudinal wall 150 is configured to be inserted into the base cavity. In this example, the lip longitudinal wall 150 substantially fits the base cavity.

The base longitudinal wall 180 of this example comprises the base engaging portion 130. In this example, the base engaging portion 130 comprises a triangular cross-section that protrudes from the inner base longitudinal surface 182. The shape of the base engaging portion 130 substantially matches the shape of the lip engaging portion 140. In this example, the lip engaging portion 140 fits with base engaging portion 130 to connect the sealing lip 120 to the base 110.

In this figure, the lip longitudinal wall 150 is enclosed between the base fitting wall 111 and the base longitudinal wall 180. The outer lip longitudinal surface 151 faces the inner base fitting surface 113, in particular, the second end of the inner base fitting surface 113. In addition, the lip longitudinal end 153 faces the inner base radial surface 172, the inner lip longitudinal surface 152 faces the inner base longitudinal surface 182 and the inner lip radial surface 162 faces the base longitudinal distal end 184. Furthermore, the outer base longitudinal surface 181 faces the inner lip closing surface 123.

Accordingly, a channel 183 is defined between these surfaces. In this figure, the channel 183 starts between the inner lip radial surface 162 and the base longitudinal distal end 184. Then, the channel 183 continues between the inner base longitudinal surface 182 and the inner lip longitudinal surface 152; and between the inner base radial surface 172 and the lip longitudinal end 153. Finally, the channel 183 extends between the outer lip longitudinal surface 151 and the inner base fitting surface 113.

In order to prevent lubricant leaks from flowing through the channel 183, obstacles may be provided. In the example of this figure, the shape of the lip engaging portion 140 and the base engaging portion 130 obstruct the flow of lubricant along the channel 183. In addition, the lip longitudinal wall 150 may comprise one or more fixing projections protruding towards the channel 183. In addition, or alternatively, the base fitting wall and/or the base longitudinal wall may comprise one or more fixing projections.

In some examples, the lubricant retention system comprises a fixing projection projecting from one of the base and the sealing lip configured to press the other of the base and the sealing lip when the sealing lip is coupled to the base. The pressure exerted by the fixing projection may enhance the attachment between the base and the sealing lip. In some examples, the fixing projection may be arranged at the sealing lip. In other examples, the fixing projection may be arranged at the base.

In some examples, the lubricant retention system comprises a plurality of fixing projections. In some examples, the plurality of fixing projections may be arranged at the sealing lip. In other examples, the plurality of fixing projections may be arranged at the base. In further examples, the base comprises one or more fixing projections and the sealing lip also comprises one or more fixing projections.

The lip longitudinal wall 150 of this example comprises a plurality of fixing projections 190. A fixing projection 190 projects or protrudes from the outer lip longitudinal surface 151 towards the inner base fitting surface 113 and a fixing projection protrudes from the inner lip longitudinal surface 152 towards the inner base longitudinal surface 182. The fixing projections 190 press against the inner base fitting surface 113 and the inner base longitudinal surface 182. The lip longitudinal wall 150 is thus clamped between the base fitting wall 111 and the base longitudinal wall 180. This pressure increases the friction between the base 110 and the sealing lip 120. Accordingly, the connection between the base 110 and the sealing lip 120 is enhanced. The sealing lip may thus be locked onto the base. In addition, the fixing projections 190 block the path of the lubricant flowing along the channel 183. Risk of lubricant leakage may be further reduced.

In this example, a fixing projection protrudes from the outer lip longitudinal surface 151 and from the inner longitudinal surface 152. However, in other examples, one fixing protrusion may protrude from the inner base fitting surface 113 towards the outer lip longitudinal surface 151 and another fixing protrusion may protrude from the inner base longitudinal surface 182 towards the inner lip longitudinal surface 152. In these examples, the lip longitudinal surface may also be clamped between the base fitting surface 111 and the base longitudinal wall 180.

The lubricant retention system 100 of this example extends 360°. As explained before, the base and/or the sealing lip may comprise a single annular segment extending 360° or a plurality of segments joined together that add up 360°. In these examples, the lip distal end extends 360° such that the lip distal end contacts second bearing component along the whole circumference in a continuous way. Leaks from the chamber defined by the sealing lip are thus avoided. The lubricant retention system of this example is made from a flexible material, e.g. rubber.

The sealing lip 120 of this example comprises an internal stiffener 195 or reinforcement. The internal stiffener 195 is arranged at the corner between the lip longitudinal wall 150 and the lip radial wall 160. In this figure, the internal stiffener 195 comprises a first segment extending a length of the lip longitudinal wall 150 and a second segment extending a length of the lip radial wall 160. The internal stiffener prevents an excessive deformation of the flexible material.

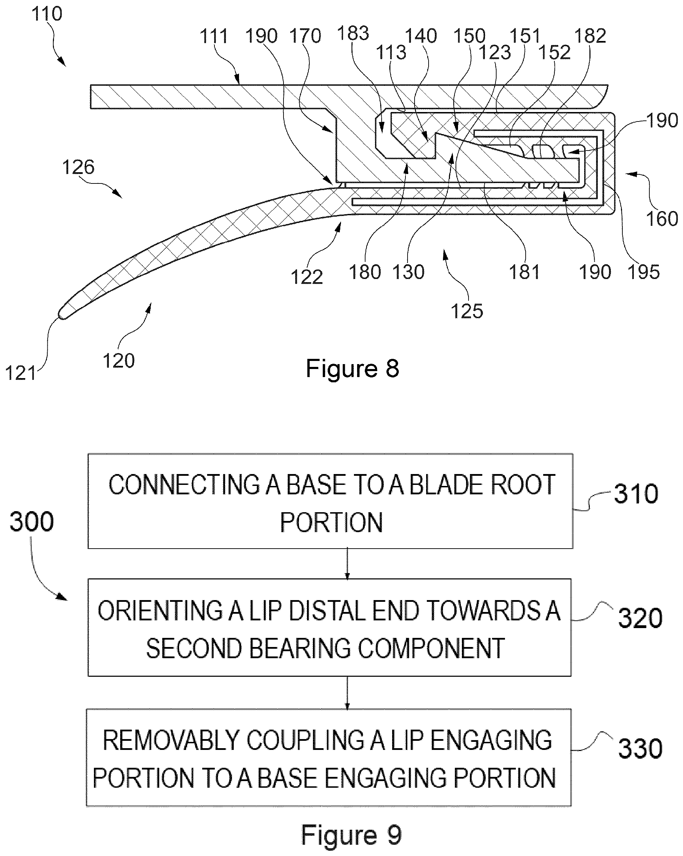

Figure 8 shows a lubricant retention system according to one example of the present disclosure. The base 110 and the sealing lip 120 of this example, may comprise features according to any of the examples herein described. For example, the respective engaging portions may be according to any of the examples herein disclosed.

The lip closing wall 122 of this figure comprises a straight portion 125 and a curved portion 126. The straight portion 125 extends between the lip radial wall 160 and the curved portion 126, whereas the curved portion 126 extends from the straight portion 125 to the lip distal end 121. The straight portion 125 of this example extends substantially parallel to the base longitudinal wall 180.

In this figure, the base longitudinal wall 180 is enclosed between the straight portion 125 of the lip closing wall 122 and the lip longitudinal wall 150. The straight portion 125 of the lip closing wall 122, the lip radial wall 160 and the lip longitudinal wall 150 defines a lip cavity configured to receive the base longitudinal wall 180. Accordingly, in this example, the lip longitudinal wall 150 is inserted into the base cavity (defined between the base fitting wall 111, the base radial wall 170 and the base longitudinal wall 180) and the base longitudinal wall 180 is inserted into the lip cavity. Engagement between the base 110 and the sealing lip 120 is enhanced and the sealing effect is improved.

Compared to the example of figure 7, in this example the channel 183 also extends between the straight portion of the inner lip closing surface 123 and the outer base longitudinal surface 181. The length of the channel 183 is consequently extended. The serpentine effect of the channel is thus enhanced. This hinders the flow of lubricant within the channel 183.

In figure 8, a plurality of fixing projections 190 extends from the straight portion 125 of the inner lip closing surface 123 to the outer base longitudinal surface 181. In addition, the inner lip longitudinal surface 152 comprises a plurality of fixing projections 190 that protrude to the inner base longitudinal surface 182. In addition, the fixing projections 190 enhance the sealing effect of the two-pieces of the lubricant retention system of the present disclosure.

Similar to the sealing lip 120 of figure 7, the sealing lip 120 of this figure comprises an internal stiffener 195. As the internal stiffener 195 of figure 7, the internal stiffener 195 of figure 8 comprises a first segment extending a length of the lip longitudinal wall 150 and a second segment extending a length of the lip radial wall 160. However, the internal stiffener of this example also comprises a third segment extending along the straight portion 125 of the lip closing wall 122. An excessive deformation of the lip closing wall 122 is thus prevented. This internal stiffener may also ensure that the fixing projections 190 protruding from the sealing lip contacts the base and provides a sufficient pressure against the base. The internal stiffener may be made from steel and the sealing lip from rubber.

In all these examples, the fixing projections extend from the sealing lip towards the base. However, in other examples, the fixing projections may protrude from the base towards the sealing lip. For example, fixing projections may project towards the sealing lip 120 from the inner base fitting surface 113 and/or from the inner base longitudinal surface 182 and/or from the outer base longitudinal surface 181.

Figure 9 is a block diagram of a method 300 for mounting a lubricant retention system for a pitch bearing in a wind turbine blade according to an example of the present disclosure. The lubricant retention system and the wind turbine may be according to any of the examples herein disclosed. In this example, the pitch bearing comprises a first bearing component and a second bearing component, the first bearing component configured to rotate with respect to the second bearing component.

At block 310, connecting a base of the lubricant retention system to a blade root portion of the wind turbine blade configured to be coupled to the first bearing component is represented. The base may be connected to a blade shell and/or to a blade root attachment portion, e.g. a mounting flange.

In some examples, connecting the base to the blade root portion comprises positioning an outer base fitting surface of a base fitting wall of the base to fit a surface of the wind turbine blade. The outer base fitting surface may thus be fitted with the surface of the wind turbine blade.

When the wind turbine blade is coupled to the outer ring of the pitch bearing, the method may comprise fitting the outer base fitting surface with the inner blade shell and/or an inner surface of the blade root attachment portion, e.g. an inner surface of a mounting flange. The base is thus positioned within the wind turbine blade. In these examples, connecting the base to the blade root portion may comprise adhering the outer base fitting surface to the inner blade shell and/or an inner surface of the blade root attachment portion. In addition, or alternatively, connecting the base the blade root portion may comprise inserting a pressing element within the wind turbine blade and pressing an inner base fitting surface with the pressing element against the inner surface of the blade, e.g. inner blade shell and/or inner surface of the blade root attachment portion. In some examples, the pressing element may be a ring with a variable diameter. The pressing element may be inserted in the wind turbine blade with a first diameter, then positioned to be circled by the base fitting wall and increasing the diameter to a second diameter to press the base fitting wall towards the inner surface of the blade.

When the wind turbine blade is coupled to the inner ring of the pitch bearing, the method may comprise fitting the outer base fitting surface with the outer blade shell and/or an outer surface of the blade root attachment portion, e.g. an outer surface of a mounting flange. The base is thus positioned around the wind turbine blade. In these examples, connecting the base to the blade root portion may comprise adhering the outer base fitting surface to the inner blade shell and/or an inner surface of the blade root attachment portion. In addition, or alternatively, connecting the base the blade root portion may comprise wrapping the base fitting wall and the blade root with a pressing element to press the base fitting wall against the outer surface of the blade, e.g. outer blade shell and/or outer surface of the blade root attachment portion. In some examples, the pressing element may be a ring with a variable diameter. The pressing element may be positioned around the base fitting wall and then the diameter of the pressing element be adjusted to press the base fitting wall towards the outer surface of the wind turbine. In some examples, the pressing element may be a steel wire or a plurality of steel wires. The steel wire may wrap the base fitting wall and press the base fitting wall against the outer surface of the wind turbine blade. Pression exerted by the steel wires may be adjusted.

These connection methods allow connecting the lubricant retention system to existing wind turbines. In these examples, the wind turbine blade is coupled the first bearing component and the rotor hub to the second bearing component.

In further examples, the base may be connected to the blade root portion during manufacturing. For example, the blade shell of the root portion may be infused together with the base. In these examples, the method may further comprise coupling the blade having the base of the lubricant retention system to the first bearing component. This may involve lifting the blade with the base lubricant retention from the ground to attach the blade to the first bearing component.

The method further comprises orienting a lip distal end of a sealing lip of the lubricant retention system towards the second bearing component as represented at block 320. The sealing lip may be positioned close to the base of the lubricant sealing system with the lip distal end facing the second bearing component. The lip distal end may be positioned towards the second bearing component when the blade is coupled to the first bearing component, e.g. in existing wind turbines or after lifting and coupling a wind turbine blade to the first bearing component.

Removably coupling a lip engaging portion of the sealing lip to a base engaging portion of the base in such a way that the lip distal end of the sealing lip contacts the second bearing component for defining a chamber for retaining lubricant from the pitch bearing is represented at block 320. The sealing lip may be removably coupled to the base according to any of the examples herein discloses. In some examples, removably coupling a lip engaging portion to the base engaging portion may comprise clipping the lip engaging porting into the base engaging portion. The sealing lip may thus be removably coupled to the base when the blade is coupled to the first bearing component. The lip distal end may thus be adjusted to the second bearing component to ensure a permanent contact. Accordingly, a chamber for accumulating lubricant leaks from the pitch bearing is created.

In some examples, the method may further comprise forming a sealing lip extending 360°. In some examples, forming a 360° sealing lip may comprise joining two ends of a profile to form an annular body. Alternatively, the 360° sealing lip may be formed by joining a plurality of annular segments to form the annular sealing lip. The lip distal end of these examples extends continuously to ensure that the lubricant leak points of the pitch bearing is totally enclosed.

In some examples, the method may comprise inserting a lip longitudinal wall of the sealing lip into a base cavity. The method may further comprise receiving a base longitudinal wall into a lip cavity.

This written description uses examples to disclose the invention, including the preferred embodiments, and also to enable any person skilled in the art to practice the invention, including making and using any devices or systems and performing any incorporated methods. The patentable scope of the invention is defined by the claims, and may include other examples that occur to those skilled in the art.

If reference signs related to drawings are placed in parentheses in a claim, they are solely for attempting to increase the intelligibility of the claim, and shall not be construed as limiting the scope of the claim.

## Claims

1. A lubricant retention system (100) for a pitch bearing (31) of a wind turbine, wherein the pitch bearing (31) comprises a first bearing component (36) configured to be coupled to a wind turbine blade (7) and a second bearing component (37) configured to be coupled to a rotor hub (6) of a wind turbine, the first bearing component (36) being configured to rotate with respect to the second bearing component (37); the lubricant retention system (100) comprising:
a base (110) configured to be connected to a wind turbine blade (7) so that the lubricant retention system is configured to rotate together with the first bearing component (36) when coupled to the wind turbine blade (7), the base (110) comprising a base fitting wall (111) having an outer base fitting surface (112) configured to fit a surface of the wind turbine blade (7);
a sealing lip (120) comprising a lip distal end (121) configured to contact the second bearing component (37) coupled to a rotor hub (6) for defining a chamber (101) for retaining lubricant from the pitch bearing (31);
wherein the base (110) comprises a base engaging portion (130) configured to engage with a lip engaging portion (140) of the sealing lip (120) for removably coupling the sealing lip (120) to the base (110).

2. The lubricant retention system (100) according to claim 1, wherein one of the base engaging portion (130) and the lip engaging portion (140) comprises a protrusion and the other one comprises a receptacle to receive the protrusion.

3. The lubricant retention system (100) according to any of claims 1 - 2, wherein the lubricant retention system (100) comprises a fixing projection (190) projecting from one of base (110) and the sealing lip (120) configured to press the other of the base (110) and the sealing lip (120) when the sealing lip (120) is coupled to the base (110).

4. The lubricant retention system (100) according to any of claims 1 - 3, wherein the sealing lip (120) comprises:
a lip longitudinal wall (150) comprising an outer lip longitudinal surface (151) and an inner lip longitudinal surface (152);
a lip radial wall (160) extending substantially perpendicular from the lip longitudinal wall (150) and comprising an outer lip radial surface (161) and an inner lip radial surface (162); and
a lip closing wall (122) extending from the lip radial wall (160) to the lip distal end (121) and comprising an outer lip closing surface (124) and an inner lip closing surface (123).

5. The lubricant retention system (100) according to claim 4, wherein the lip longitudinal wall (150) comprises the lip engaging portion (140).

6. The lubricant retention system (100) according to any of claims 4 - 5, wherein the lip closing wall (122) comprises curved portion (126) extending to the lip distal end (121).

7. The lubricant retention system (100) according to any of claims 4 - 6, wherein the lip closing wall (122) forms an angle with the lip radial wall (160) between 60° and 150°, specifically between 90° and 150°.

8. The lubricant retention system (100) according to any of claims 4 - 7, wherein the base (110) comprises:
a base radial wall (170) extending substantially perpendicular from the base fitting wall (111) and comprising an inner base radial surface (172) and an outer base radial surface (171);
a base longitudinal wall (180) extending substantially perpendicular from the base radial wall (170) and comprising an inner base longitudinal surface (182) and an outer base longitudinal surface (181);
wherein the base fitting wall (111) further comprises an inner base fitting surface (113) opposite to the outer base fitting surface (112); and
wherein the inner base radial surface (172), the inner base longitudinal surface (182) and the inner base fitting surface (112) define a base cavity.

9. The lubricant retention system (100) according to claim 8, wherein the base longitudinal wall (180) comprises the base engaging portion (130).

10. The lubricant retention system (100) according to any of claims 8 - 9, wherein the lip longitudinal wall (150) is configured to be inserted into the base cavity.

11. The lubricant retention system (100) according to any of claims 1 - 10, wherein the lubricant retention system (100) extends 360°.

12. The lubricant retention system (100) according to any of claims 1 - 11, wherein the lubricant retention system (100) comprises rubber and the sealing lip (120) comprises an internal stiffener (195).

13. A blade root portion (50) of a wind turbine blade (7) comprising:
a blade shell (73) comprising an inner blade shell surface (74) and an outer blade shell surface (75);
a blade root attachment portion (55) configured to attach the blade root portion (50) to a first bearing component (36) of a pitch bearing (31);
a lubricant retention system (100) according to any of claims 1 - 12; wherein the base (110) is coupled to the blade shell (73) and/or the blade root attachment portion (55).

14. The blade root portion (50) according to claim 13, wherein the outer base fitting surface (112) fits the inner blade shell surface (74) or the outer blade shell surface (75).

15. A method (300) for mounting a lubricant retention system for a pitch bearing in a wind turbine blade, wherein the pitch bearing comprises a first bearing component and a second bearing component, the first bearing component configured to rotate with respect to the second bearing component, the method comprising:
connecting (310) a base of the lubricant retention system to a blade root portion of the wind turbine blade configured to be coupled to the first bearing component so that the lubricant retention system is configured to rotate together with the first bearing component when coupled to the wind turbine blade;
orienting (320) a lip distal end of a sealing lip of the lubricant retention system towards the second bearing component; and
removably coupling (330) a lip engaging portion of the sealing lip to a base engaging portion of the base in such a way that the lip distal end of the sealing lip contacts the second bearing component for defining a chamber for retaining lubricant from the pitch bearing.

## Patentansprüche

1. Ein Schmiermittelrückhaltesystem (100) für ein Pitchlager (31) einer Windturbine, wobei das Pitchlager (31) eine erste Lagerkomponente (36), die dazu konfiguriert ist, mit einem Windturbinenblatt (7) gekoppelt zu werden und eine zweite Lagerkomponente (37), die dazu konfiguriert ist, mit einer Rotornabe (6) einer Windturbine gekoppelt zu werden, umfasst, wobei die erste Lagerkomponente (36) dazu konfiguriert ist, sich in Bezug auf die zweite Lagerkomponente (37) zu drehen; wobei das Schmiermittelrückhaltesystem (100) Folgendes umfasst:
eine Basis (110), die dazu konfiguriert ist, mit einem Windturbinenblatt (7) verbunden zu werden, so dass das Schmiermittelrückhaltesystem dazu konfiguriert ist, sich zusammen mit der ersten Lagerkomponente (36) zu drehen, wenn es mit dem Windturbinenblatt (7) gekoppelt ist, wobei die Basis (110) eine Basispassungswand (111) umfasst, die eine äußere Basispassungsfläche (112) aufweist, die dazu konfiguriert ist, zu einer Fläche des Windturbinenblatts (7) zu passen;
eine Dichtlippe (120), die ein distales Lippenende (121) umfasst, das dazu konfiguriert ist, die zweite Lagerkomponente (37) zu berühren, die an eine Rotornabe (6) gekoppelt ist, um eine Kammer (101) zum Zurückhalten von Schmiermittel von dem Pitchlager (31) zu definieren;
wobei die Basis (110) einen Basiseingriffsabschnitt (130) umfasst, der konfiguriert dazu ist, mit einem Lippeneingriffsabschnitt (140) der Dichtlippe (120) in Eingriff zu kommen, um die Dichtlippe (120) lösbar an die Basis (110) zu koppeln.

2. Das Schmiermittelrückhaltesystem (100) nach Anspruch 1, wobei einer von dem Basiseingriffsabschnitt (130) und dem Lippeneingriffsabschnitt (140) einen Vorsprung umfasst und der andere eine Aufnahme zum Aufnehmen des Vorsprungs umfasst.

3. Das Schmiermittelrückhaltesystem (100) nach einem der Ansprüche 1 bis 2, wobei das Schmiermittelrückhaltesystem (100) einen Befestigungsvorsprung (190) umfasst, der von einer von der Basis (110) und der Dichtlippe (120) vorsteht und dazu konfiguriert ist, die andere von der Basis (110) und der Dichtlippe (120) zu drücken, wenn die Dichtlippe (120) an die Basis (110) gekoppelt ist.

4. Das Schmiermittelrückhaltesystem (100) nach einem der Ansprüche 1 bis 3, wobei die Dichtlippe (120) Folgendes umfasst:
eine Lippenlängswand (150), die eine Außenlippenlängsfläche (151) und eine Innenlippenlängsfläche (152) umfasst;
eine Lippenradialwand (160), die sich im Wesentlichen senkrecht von der Lippenlängswand (150) erstreckt und eine radiale Außenlippenfläche (161) und eine radiale Innenlippenfläche (162) umfasst; und
eine Lippenschließwand (122), die sich von der radialen Lippenwand (160) zu dem distalen Lippenende (121) erstreckt und eine äußere Lippenschließfläche (124) und eine innere Lippenschließfläche (123) umfasst.

5. Das Schmiermittelrückhaltesystem (100) nach Anspruch 4, wobei die Lippenlängswand (150) den Lippeneingriffsabschnitt (140) umfasst.

6. Das Schmiermittelrückhaltesystem (100) nach einem der Ansprüche 4 bis 5, wobei die Lippenverschlusswand (122) einen gekrümmten Abschnitt (126) umfasst, der sich zu dem distalen Lippenende (121) erstreckt.

7. Das Schmiermittelrückhaltesystem (100) nach einem der Ansprüche 4 bis 6, wobei die Lippenschließwand (122) mit der radialen Lippenwand (160) einen Winkel zwischen 60° und 150°, insbesondere zwischen 90° und 150°, bildet.

8. Das Schmiermittelrückhaltesystem (100) nach einem der Ansprüche 4 bis 7, wobei die Basis (110) Folgendes umfasst:
eine Basisradialwand (170), die sich im Wesentlichen senkrecht von der Basisanpassungswand (111) erstreckt und eine innere Basisradialfläche (172) und eine äußere Basisradialfläche (171) umfasst;
eine Basislängswand (180), die sich im Wesentlichen senkrecht von der Basisradialwand (170) erstreckt und eine innere Basislängsfläche (182) und eine äußere Basislängsfläche (181) umfasst;
wobei die Basispassungswand (111) ferner eine innere Basispassungsfläche (113) gegenüber der äußeren Basispassungsfläche (112) umfasst; und
wobei die innere Basisradialfläche (172), die innere Basislängsfläche (182) und die innere Basispassungsfläche (112) einen Basishohlraum definieren.

9. Das Schmiermittelrückhaltesystem (100) nach Anspruch 8, wobei die Basislängswand (180) den Basiseingriffsabschnitt (130) umfasst.

10. Das Schmiermittelrückhaltesystem (100) nach einem der Ansprüche 8 bis 9, wobei die Lippenlängswand (150) dazu konfiguriert ist, in den Basishohlraum eingeführt zu werden.

11. Das Schmiermittelrückhaltesystem (100) nach einem der Ansprüche 1 bis 10, wobei sich das Schmiermittelrückhaltesystem (100) um 360° erstreckt.

12. Das Schmiermittelrückhaltesystem (100) nach einem der Ansprüche 1 bis 11, wobei das Schmiermittelrückhaltesystem (100) Gummi umfasst und die Dichtlippe (120) eine innere Versteifung (195) umfasst.

13. Ein Blattwurzelabschnitt (50) eines Windturbinenblatts (7), umfassend:
eine Blattschale (73), die eine innere Blattschalenfläche (74) und eine äußere Blattschalenfläche (75) umfasst;
einen Blattwurzelbefestigungsabschnitt (55), der dazu konfiguriert ist, den Blattwurzelabschnitt (50) an einer ersten Lagerkomponente (36) eines Pitchlagers (31) zu befestigen;
ein Schmiermittelrückhaltesystem (100) nach einem der Ansprüche 1 bis 12; wobei die Basis (110) an die Blattschale (73) und/oder den Blattwurzelbefestigungsabschnitt (55) gekoppelt ist.

14. Der Blattwurzelabschnitt (50) nach Anspruch 13, wobei die äußere Basispassungsfläche (112) zu der inneren Blattschalenfläche (74) oder der äußeren Blattschalenfläche (75) passt.

15. Ein Verfahren (300) zum Montieren eines Schmiermittelrückhaltesystems für ein Pitchlager in einem Windturbinenblatt, wobei das Pitchlager eine erste Lagerkomponente und eine zweite Lagerkomponente umfasst, wobei die erste Lagerkomponente dazu konfiguriert ist, sich in Bezug auf die zweite Lagerkomponente zu drehen, wobei das Verfahren Folgendes umfasst:
verbinden (310) einer Basis des Schmiermittelrückhaltesystems mit einem Blattwurzelabschnitt des Windturbinenblatts, der dazu konfiguriert ist, mit der ersten Lagerkomponente gekoppelt zu sein, so dass das Schmiermittelrückhaltesystem dazu konfiguriert ist, sich zusammen mit der ersten Lagerkomponente zu drehen, wenn es mit dem Windturbinenblatt gekoppelt ist;
ausrichten (320) eines distalen Lippenendes einer Dichtlippe des Schmiermittelrückhaltesystems in Richtung der zweiten Lagerkomponente; und
lösbares Koppeln (330) eines Lippeneingriffsabschnitts der Dichtlippe an einen Basiseingriffsabschnitt der Basis auf eine solche Weise, dass das distale Lippenende der Dichtlippe die zweite Lagerkomponente berührt, um eine Kammer zum Zurückhalten von Schmiermittel aus dem Pitchlager zu definieren.

## Revendications

1. Un système de rétention de lubrifiant (100) pour un palier de régulation de pas (31) d'une éolienne, dans lequel le palier de régulation de pas (31) comprend un premier composant de palier (36) configuré de manière à être couplé à une pale d'éolienne (7) et un second composant de palier (37) configuré de manière à être couplé à un moyeu de rotor (6) d'une éolienne, le premier composant de palier (36) étant configuré de manière à pivoter par rapport au second composant de palier (37) ; le système de rétention de lubrifiant (100) comprenant :
une base (110) configurée de manière à être connectée à une pale d'éolienne (7) de sorte que le système de rétention de lubrifiant est configuré de manière à pivoter avec le premier composant de palier (36) lorsqu'il est couplé à la pale d'éolienne (7), la base (110) comprenant une paroi d'ajustement de base (111) ayant une surface d'ajustement de base extérieure (112) configurée de manière à s'ajuster à une surface de la pale d'éolienne (7) ;
une lèvre d'étanchéité (120) comprenant une extrémité distale de lèvre (121) configurée de manière à venir en contact avec le second composant de palier (37) couplé à un moyeu de rotor (6) pour définir une chambre (101) pour retenir du lubrifiant du palier de régulation de pas (31) ;
dans lequel la base (110) comprend une partie d'engagement de base (130) configurée de manière à s'engager avec une partie d'engagement de lèvre (140) de la lèvre d'étanchéité (120) pour coupler de manière amovible la lèvre d'étanchéité (120) à la base (110).

2. Le système de rétention de lubrifiant (100) selon la revendication 1, dans lequel l'une de la partie d'engagement de base (130) et de la partie d'engagement de lèvre (140) comprend une saillie et l'autre comprend un réceptacle pour recevoir la saillie.

3. Le système de rétention de lubrifiant (100) selon l'une quelconque des revendications 1 à 2, dans lequel le système de rétention de lubrifiant (100) comprend une saillie de fixation (190) faisant saillie de l'une de la base (110) et de la lèvre d'étanchéité (120) configurée de manière à presser l'autre de la base (110) et de la lèvre d'étanchéité (120) lorsque la lèvre d'étanchéité (120) est couplée à la base (110).

4. Le système de rétention de lubrifiant (100) selon l'une quelconque des revendications 1 à 3, dans lequel la lèvre d'étanchéité (120) comprend :
une paroi longitudinale de lèvre (150) comprenant une surface longitudinale de lèvre extérieure (151) et une surface longitudinale de lèvre intérieure (152) ;
une paroi radiale de lèvre (160) s'étendant de manière essentiellement perpendiculaire à partir de la paroi longitudinale de lèvre (150) et comprenant une surface radiale de lèvre extérieure (161) et une surface radiale de lèvre intérieure (162) ; et
une paroi de fermeture de lèvre (122) s'étendant de la paroi radiale de lèvre (160) à l'extrémité distale de lèvre (121) et comprenant une surface de fermeture de lèvre extérieure (124) et une surface de fermeture de lèvre intérieure (123).

5. Le système de rétention de lubrifiant (100) selon la revendication 4, dans lequel la paroi longitudinale de lèvre (150) comprend la partie d'engagement de lèvre (140).

6. Le système de rétention de lubrifiant (100) selon l'une quelconque des revendications 4 à 5, dans lequel la paroi de fermeture de lèvre (122) comprend une partie incurvée (126) s'étendant jusqu'à l'extrémité distale de lèvre (121).

7. Le système de rétention de lubrifiant (100) selon l'une quelconque des revendications 4 à 6, dans lequel la paroi de fermeture de lèvre (122) forme un angle avec la paroi radiale de lèvre (160) d'entre 60° et 150°, spécifiquement d'entre 90° et 150°.

8. Le système de rétention de lubrifiant (100) selon l'une quelconque des revendications 4 à 7, dans lequel la base (110) comprend :
une paroi radiale de base (170) s'étendant de manière essentiellement perpendiculaire à partir de la paroi d'ajustement de base (111) et comprenant une surface radiale de base intérieure (172) et une surface radiale de base extérieure (171) ;
une paroi longitudinale de base (180) s'étendant de manière essentiellement perpendiculaire à partir de la paroi radiale de base (170) et comprenant une surface longitudinale de base intérieure (182) et une surface longitudinale de base extérieure (181) ;
dans lequel la paroi d'ajustement de base (111) comprend en outre une surface d'ajustement de base intérieure (113) opposée à la surface d'ajustement de base extérieure (112) ; et
dans lequel la surface radiale de base intérieure (172), la surface longitudinale de base intérieure (182) et la surface d'ajustement de base intérieure (112) définissent une cavité de base.

9. Le système de rétention de lubrifiant (100) selon la revendication 8, dans lequel la paroi longitudinale de base (180) comprend la partie d'engagement de base (130).

10. Le système de rétention de lubrifiant (100) selon l'une quelconque des revendications 8 à 9, dans lequel la paroi longitudinale de lèvre (150) est configurée de manière à être insérée dans la cavité de base.

11. Le système de rétention de lubrifiant (100) selon l'une quelconque des revendications 1 à 10, dans lequel le système de rétention de lubrifiant (100) s'étend à 360°.

12. Le système de rétention de lubrifiant (100) selon l'une quelconque des revendications 1 à 11, dans lequel le système de rétention de lubrifiant (100) comprend du caoutchouc et la lèvre d'étanchéité (120) comprend un raidisseur interne (195).

13. Une partie de pied de pale (50) d'une pale d'éolienne (7) comprenant :
une coque de pale (73) comprenant une surface de coque de pale intérieure (74) et une surface de coque de pale extérieure (75) ;
une partie de fixation de pied de pale (55) configurée de manière à fixer la partie de pied de pale (50) à un premier composant de palier (36) d'un palier de régulation de pas (31) ;
un système de rétention de lubrifiant (100) selon l'une quelconque des revendications 1 à 12 ; dans lequel la base (110) est couplée à la coque de pale (73) et/ou à la partie de fixation de pied de pale (55).

14. La partie de pied de pale (50) selon la revendication 13, dans laquelle la surface d'ajustement de base extérieure (112) s'ajuste à la surface de coque de pale intérieure (74) ou à la surface de coque de pale extérieure (75).

15. Un procédé (300) de montage d'un système de rétention de lubrifiant pour un palier de régulation de pas dans une pale d'éolienne, dans lequel le palier de régulation de pas comprend un premier composant de palier et un second composant de palier, le premier composant de palier étant configuré de manière à pivoter par rapport au second composant de palier, le procédé comprenant :
connecter (310) une base du système de rétention de lubrifiant à une partie de pied de pale de la pale d'éolienne configurée de manière à être couplée au premier composant de palier de sorte que le système de rétention de lubrifiant est configuré de manière à pivoter avec le premier composant de palier lorsqu'il est couplé à la pale d'éolienne ;
orienter (320) une extrémité distale de lèvre d'une lèvre d'étanchéité du système de rétention de lubrifiant vers le second composant de palier ; et
coupler de manière amovible (330) une partie d'engagement de lèvre de la lèvre d'étanchéité à une partie d'engagement de base de la base de telle sorte que l'extrémité distale de lèvre de la lèvre d'étanchéité vient en contact avec le second composant de palier pour définir une chambre pour retenir du lubrifiant du palier de régulation de pas.
